# EUROPÄISCHE PATENTSCHRIFT

(11) **EP 1 961 255 B1**
(45) Veröffentlichungstag und Bekanntmachung des Hinweises auf die Patenterteilung: **03.11.2010**
(21) Anmeldenummer: 06793292.1
(22) Anmeldetag: 07.09.2006
(51) Int. Cl.: H04W 48/02

(54) **VERFAHREN UND VORRICHTUNG ZUM DEAKTIVIEREN VON MOBILFUNKSTATIONEN**
METHOD AND APPARATUS FOR DEACTIVATING MOBILE RADIO STATIONS
PROCEDE ET DISPOSITIF POUR LA DESACTIVATION DE STATIONS MOBILES

(30) Priorität: 15.12.2005 DE 102005060029
(43) Veröffentlichungstag der Anmeldung: 27.08.2008
(73) Patentinhaber: SIEMENS AKTIENGESELLSCHAFT, 80333 München (DE)
(72) Erfinder: DEMBSKI-MINSSEN, Ricklef, 27419 Sittensen (DE); KEBBEL, Jens, 21365 Adendorf (DE); WOLFF, Florian, 22459 Hamburg (DE); VON DER HEIDE, Stefan, 22846 Norderstedt (DE)
(74) Vertreter: Maier, Daniel Oliver
(86) Internationale Anmeldenummer: PCT/EP2006/066092
(87) Internationale Veröffentlichungsnummer: WO 2007/071462

(56) Entgegenhaltungen:
- EP-A- 0 891 110
- EP-A- 1 039 771
- EP-A- 1 041 847
- WO-A1-00/76087
- DE-A1- 19 833 777
- B. WALKE: "Mobilfunknetze und ihre Protokolle 1, Grundlagen, GSM, UMTS und andere zellulare Mobilfunknetze, 3. Auflage, 3.7 Aktualisierung des Aufenthaltsbereiches (Location Update)" 2001, B.G. TEUBNER , STUTTGART , XP002410081 ISBN: 3-519-26430-7 das ganze Dokument

## Beschreibung

### Technisches Gebiet

Die Erfindung bezieht sich auf ein Verfahren und eine Vorrichtung zum netzseitigen Deaktivieren von Mobilstationen, die in einer Funkzelle eines Funkkommunikationsnetzes eingebucht sind, insbesondere in einer Picozelle eines GSM-Mobilfunknetzes, die sich an Bord eines Flugzeugs befindet.

### Stand der Technik

Ein Mobiltelefon, das in einer Funkzelle eines Mobilfunknetzes eingebucht ist, tauscht fortlaufend Funkwellen mit einer ortsfesten Basisstation des Mobilfunknetzes aus.

Befinden sich im Sendebereich des Mobiltelefons andere elektronische Geräte, so können die Funkwellen in diesen Geräten Störungen verursachen.

In Krankenhäusern ist beispielsweise die Nutzung von Handys aus diesem Grund untersagt. In Flugzeugen ist die Verwendung von privaten, funkbasierten Kommunikationseinrichtungen heutzutage aus Sicherheitsgründen überhaupt nicht zugelassen. Es wird befürchtet, dass die Funkwellen der privaten mitgeführten Geräte die Avionik des Flugzeugs stören könnten.

Andererseits nimmt die Verwendung von mobilen Kommunikationsendeinrichtungen ständig zu. Es besteht zunehmend ein Bedarf, private Kommunikationseinrichtungen, insbesondere die nach dem weit verbreiteten GSM-Standard (Global Systems for Mobile Communication), möglichst einfach und uneingeschränkt auch während einer Flugreise nutzen zu können.

Mit der Einführung des "GSM on Board-Systems" soll zukünftig die Verwendung von privaten Mobiltelefonen in Flugzeugen unter gewissen Einschränkungen erlaubt sein. Aus Sicherheitsgründen kann hierbei nicht ausschließlich auf die Kooperationsbereitschaft der Passagiere gesetzt werden, ihre Mobiltelefone nur während der Reiseflugphase einzuschalten und während der sicherheitskritischen Start- und Landephase selbstständig abzuschalten. Um den sicherheitstechnischen Anforderungen zu genügen, scheint es zunächst möglich, die Basisstation der Funkzelle im Flugzeug bei Start bzw. Landung gesteuert durch ein von der Flugzeugelektronik bereitgestelltes Deaktivierungssignal abzuschalten. Von Nachteil wäre hierbei aber, dass für eingeschaltete Mobiltelefone Mobilfunkstationen am Boden ab einer bestimmten Flughöhe sichtbar wären und diese zur Ausstrahlung von Funkwellen animieren würden.

Aus der EP 0 891 110 A1 ist be4kannt, für die Deaktivierung eines an Bord eines Flugzeuges befindlichen Handsets eine Teilnehmerkenninformation IMSI zu verwenden.

In der WO 9428684 A1 ist ein mobiles Kommunikationssystem offenbart, bei dem die störungsfreie Nutzung von privaten Mobiltelefonen an Bord eines Flugzeugs oder eines Schiffes dadurch ermöglicht wird, indem die Mobiltelefone durch elektrische Kabel bzw. eine Infrarotschnittstelle mit dem Kommunikationssystem an Bord verbunden werden. Auch hier ist von Nachteil, dass die Sicherheit an Bord von der Kooperationsbereitschaft der Fluggäste abhängt. Außerdem ist die Verkabelung bzw. die Infrarot-Schnittstelle aufwändig und umständlich.

### Darstellung der Erfindung

Der Erfindung liegt die Aufgabe zu Grunde, ein Verfahren und eine Vorrichtung anzugeben, durch die Funkstörungen, die durch mobile Kommunikationsendeinrichtungen in einer Funkzelle eines Funkkommunikationsnetzes verursacht werden, auf möglichst einfache Weise netzseitig ausgeschaltet werden können.

Die Lösung dieser Aufgabe erfolgt bei einem Verfahren durch die Merkmale des Patentanspruchs 1 und bei einer Vorrichtung durch die Merkmale des Patentanspruchs 10. Vorteilhafte Ausgestaltungen der Erfindung sind Gegenstand von jeweils abhängigen Ansprüchen.

Erfindungsgemäß wird im Funkzugangsnetz zwischen der Basisstation (Base Transceiver Station BTS) und dem Basisstation-Controller (Base Station Controller BSC) eine Einrichtung geschaltet, welche die Anzahl und die Kennung der in der Funkzelle eingebuchten Mobilstationen registriert. Zur Kennung können zwei Teilnehmerkenninformationen, die "Temporary Mobile Subscriber Identity" (TMSI) und die "International Mobile Subscriber Identity" (IMSI) herangezogen werden. Ausgelöst von einem externen Ereignis, das als Deaktivierungssignal der Einrichtung zugeführt wird, initiiert diese Einrichtung einen Austausch von Sicherheitsnachrichten mit jeder eingebuchten Mobilstation. Im Ergebnis führt diese Interaktion dazu, dass die eingebuchten Mobilstationen ihre eigene "Subscriber Identity Module" (SIM) als ungültig, d.h. als nicht berechtigt ansehen. Infolge davon sendet keine Mobilstation mehr störende Funkwellen aus.

Bei einer Anwendung in einem Flugzeug gilt dies auch dann, wenn bei einem Landeanflug die an Bord befindlichen Mobilstationen in den Erfassungsbereich von am Boden befindlichen Sendeeinrichtungen eines Mobilfunknetzes kommen. Der inaktive Betriebszustand der Mobilstation bleibt solange aufrechterhalten, bis der Fluggast sein Mobiltelefon manuell ab- und wieder einschaltet.

Zur netzseitigen Deaktivierung sieht die Erfindung eine Systemkomponente vor, die im Funkzugangsnetz, direkt hinter dem ersten Netzelement, das heißt hinter der Basisstation, eingesetzt wird. Diese Systemkomponente, im Folgenden auch als BSC-Slave bezeichnet, verfolgt einerseits die Kommunikation zwischen der Basisstation BTS und den sich daran anschließenden zweiten Netzelement, dem Basisstation-Controller BSC. Andererseits ergreift diese erfindungsgemäße Einrichtung die Initiative, sobald ein externes Ereignis eintritt, das erfordert, eingebuchte Mobilstationen von Seiten des Netzes her zu deaktivieren. Die Einrichtung kann als Computerprogrammprodukt realisiert sein, Z.B. als Algorithmus, der auf einer Recheneinrichtung des ersten Netzelements abläuft.

Indem mehrere zu einer Gruppe zusammengefasste Mobilstationen hintereinander deaktiviert werden, wird die Signalisierungskapazität in der Funkzelle nicht überschritten.

Wenn selektiv nur bestimmte Mobilstationen in einer Funkzelle inaktiviert werden sollen, so kann dies anhand einer Positiv/Negativ-Liste erfolgen, die in der Einrichtung in einem Speicher gespeichert ist. Sobald ein Deaktivierungssignal vorliegt, wird vor dem Deaktivieren geprüft, ob die erfassten Teilnehmerkenninformationen (TMSI, IMSI) einer Mobilstation in dieser Liste enthalten sind. Dadurch können bestimmte, ausgewählte Mobilstationen in der Funkzelle tätig beleiben, andere werden gesperrt. Eine denkbare Anwendung könnte ein Gelände einer Schule sein, innerhalb dessen eine Gruppe von Kommunikationsteilnehmern (z.B. dem Lehrkörper) ihre Handys benutzen dürfen, einer anderen Gruppe (z.B. Schülern) hingen die Nutzung zumindest temporär (z.B. zu Unterrichtszeiten) nicht erlaubt ist.

Das Erfassen der ersten Teilnehmerkenninformation kann so erfolgen, dass eine über die Einrichtung geführte Aufenthalts-Registrierungs-Nachricht verwendet wird, welche als Antwort auf eine Anfrage einer Mobilstation vom dritten Netzelement an die anfordernde Mobilstation übertragen wird.

Beim Erfassen der zweiten Teilnehmerkenninformation kann mit Vorteil eine über die Einrichtung geführte Aufenthalts-Registrierungs-Nachricht verwendet werden, welche als Anfrage einer Mobilstation an das dritte Netzelement übertragen wird.

Es ist von Vorteil, wenn die Einrichtung dem zweiten Netzelement hierarchisch untergeordnete ist. Dadurch kann der Funktionsumfang, der als "Slave" betriebenen Einrichtung klein gehalten werden.

Dies ist insbesondere dann günstig, wenn die Einrichtung und das erste Netzelement an Bord eines Luftfahrzeuges eingesetzt werden, wo Ressourcen nur eingeschränkt verfügbar sind und strenge Anforderungen hinsichtlich der Ausfallsicherheit vorgegeben sind.

Bei einer Anwendung in einem Flugzeug ist ferner von Vorteil, wenn das zweite Netzelement als "Master" betreiben wird und zusammen mit dem dritte Netzelement am Boden angeordnet sind. Für die Signalübermittlung zwischen der Einrichtung und dem zweiten Netzelement kann vorteilhaft eine Satellitenübertragung genutzt werden.

Die Realisierung der Einrichtung kann beispielsweise ganz oder teilweise durch Computerprogrammprodukt erfolgen, z.B. durch ein Computerprogramm auf einem entsprechend konfigureirten Server.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung zu entnehmen sind. Es zeigen:
- Figur 1: ein Funkzugangsnetz eines GSM-Mobilfunknetzes gemäß dem Stand der Technik in einer vereinfachten Darstellung;
- Figur 2: ein Funkzugangsnetz eines Funkkommunikationssystem mit der erfindungsgemäßen Einrichtung zum Deaktivieren einer mobilen Station in einer schematischen Darstellung;
- Figur 3: einen Protokollablauf bei der erfindungsgemäßen Aufzeichnung der Kennung einer Mobilstation durch die erfindungsgemäße Einrichtung zum Deaktivieren;
- Figur 4: einen Protokollablauf beim netzseitigen Abschalten einer mobilen Station durch die erfindungsgemäße Einrichtung;
- Figur 5: ein Ausführungsbeispiel der Erfindung, bei dem sich Mobilstationen in einer Picozelle an Bord eines Flugzeugs befinden.

### Ausführung der Erfindung

Im Folgenden Teil der Beschreibung wird die Erfindung am Beispiel eines GSM-On-Board-Funkkommunikationssystems eines Flugzeugs beschrieben. Selbstverständlich ist die Erfindung nicht auf diese Anwendung oder auf eine bestimmte Ausführung eines Funkkommunikationssystems beschränkt. Unter einem Funkkommunikationssystem ist allgemein ein System zu verstehen, in welchem eine Informationsübermittlung durch Funkwellen stattfindet. Das Funkkommunikationssystem gemäß der Erfindung kann also ein beliebiges Mobilfunksystem sein, beispielsweise nach dem bereits erwähnten GSM Standard (Global System for Mobile Communications), ein diensteintegrierendes Netz, zum Beispiel gemäß dem UMTS-(Universal Mobile Telecommunications System) Standard, oder ein System der vierten Generation sein. Hervorgehoben sei auch, dass unter einem Funkkommunikationssystem auch leitungsungebundene lokale Netze, wie beispielsweise WLAN (Wire Less Lan gemäß dem Standard IEEE 802.11 sowie Breitbandnetze mit drahtlosem Zugang, beispielsweise nach dem Standard IEEE 802.16 und ähnliche Netze verstanden sind.

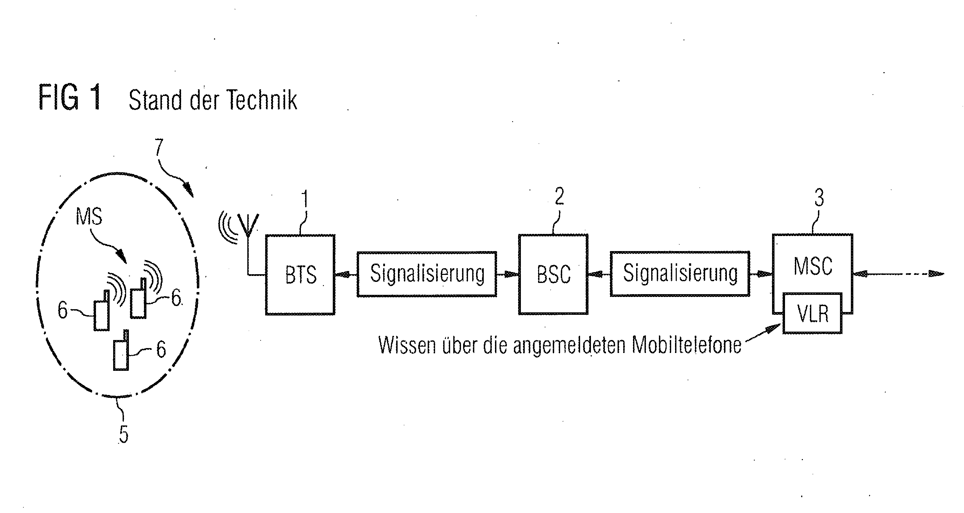

In der Figur 1 ist der Funkzugangsbereich eines herkömmlichen GSM-Mobilfunknetzes schematisch dargestellt, wobei die Funktion der einzelnen Baugruppen als bekannt vorausgesetzt werden und hier nur insoweit angesprochen werden, wie dies für die Erläuterung der vorliegenden Erfindung dienlich ist.

Ein GSM-Netz besteht bekanntlich aus zwei Arten von Teilstrecken. Zum einen sind es die Funkstrecken zwischen den mobilen Stationen (MS) und jeweils einer Basisstation (BTS), die einen festgelegten Versorgungsbereich abdeckt. Zum anderen sind es Standleitungen des Festnetzes, welche die Basisstationen mit Vermittlungseinrichtungen (Mobile Switching Center), sowie die Vermittlungseinrichtungen untereinander verbinden. In der Figur 1 ist eine Gruppe von Mobilstationen 6 (MS) zu sehen, die über eine Funkübertragungsstrecke 7 von einem ersten Netzelement 1, (Basisstation BTS), versorgt werden. Dieser Basisstation 1 ist ein zweites Netzelement 2, ein so genannter Basisstation-Controller BSC, nachgeschaltet. Der Basisstation-Controller BSC 2 steuert über eine Signalisierungsverbindung (Abis Link) eine oder mehrere Basisstationen BTS. Der BSC ist andererseits durch eine Verbindung A-link mit einem dritten Netzelement, (Mobil Switching Center MSC), verbunden. Das Mobile Switching Center stellt wie bereits erwähnt in einem digitalen GSM/UMTS-Mobilfunknetz eine volle digitale Vermittlungsstelle dar. In ihr findet die Anrufverwaltung statt. Sie besitzt u. A. eine spezielle Datei, ein Besucherverzeichnis, das so genannten Visitor Location Register, kurz VLR. Sie enthält die Daten derjenigen Mobilstationen, die sich vorübergehend im Bereich der MSC aufhalten. In dieser Datei ist also das Wissen über die angemeldeten Mobilstationen gespeichert.

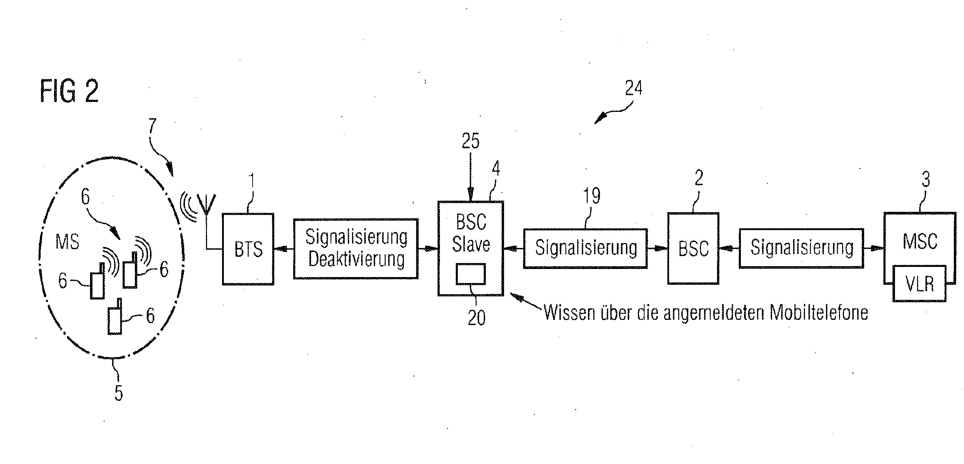

In der Figur 2 ist ein Funkzugangsnetz eines Funkkommunikationssystems mit der erfindungsgemäßen Einrichtung zum Deaktivieren einer mobilen Station vereinfacht dargestellt. Auch hier sind Mobiltelefone 6 in einer Funkzelle 5 angeordnet und werden von einer Basisstation 1 (BTS) versorgt. Zwischen der Basisstation 1 und dem Basisstation-Controller 2 ist die erfindungsgemäße Einrichtung 4 (BSC-Slave) angeordnet. Die Einrichtung 4 ist unmittelbar der Basisstation 1 (BTS) nachgeschaltet. Die Signalisierung zwischen BTS und BSC wird erfindungsgemäß über die BSC-Slave-Einheit 4 geführt.

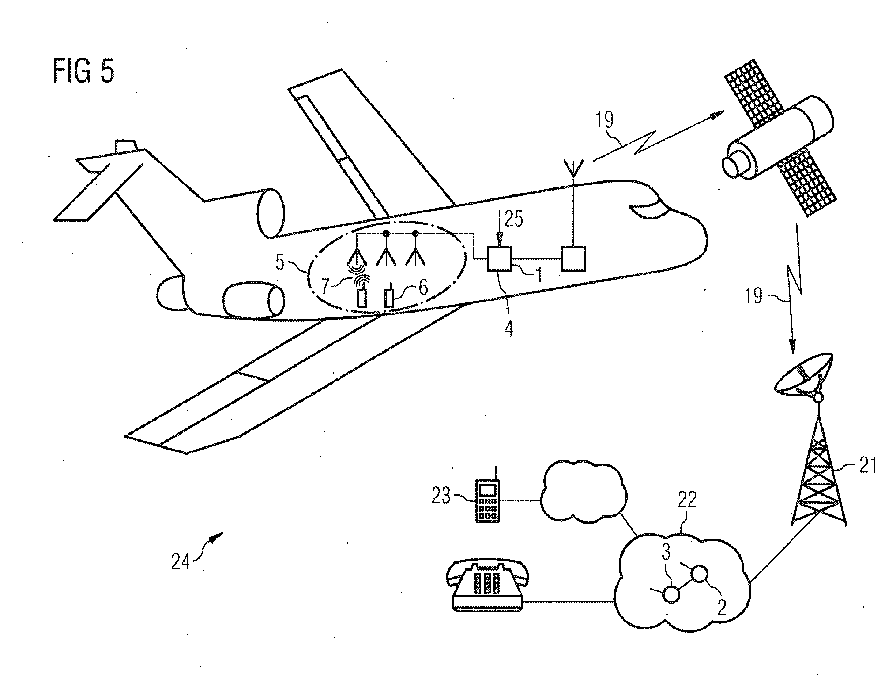

Im Weiteren wird ein Ausführungsbeispiel der Erfindung beschrieben, bei dem die Funkzelle 5 eine Pico-Funkzelle an Bord eines Flugzeugs ist (Figur 5). Die Basisstation BTS und der Basisstation-Controller BSC in der Figur 5 weist die bekannte GSM-Funktionalität auf. Lediglich die gerätetechnische Ausführung dieser Geräte 1 und 4 ist an den Einsatzort im Flugzeug angepasst und die Informationsübertragung zwischen dem BSC-Slave 4 an Bord des Flugzeugs und der am Boden befindlichen BSC 2 erfolgt nicht durch Leitungen, sondern durch eine Satellitenverbindung 19 (Figur 5).

Die erfindungsgemäße Baugruppe BSC-Slave 4 dient dazu, die Kommunikation zwischen BTS 1 und BSC 2 zu verfolgen und in Abhängigkeit eines externen Ereignisses steuernd so einzugreifen, dass es nicht zu einem störenden Aussenden von Funkwellen und damit womöglich zu einer Beeinträchtigung der Avionik des Flugzeugs kommt.

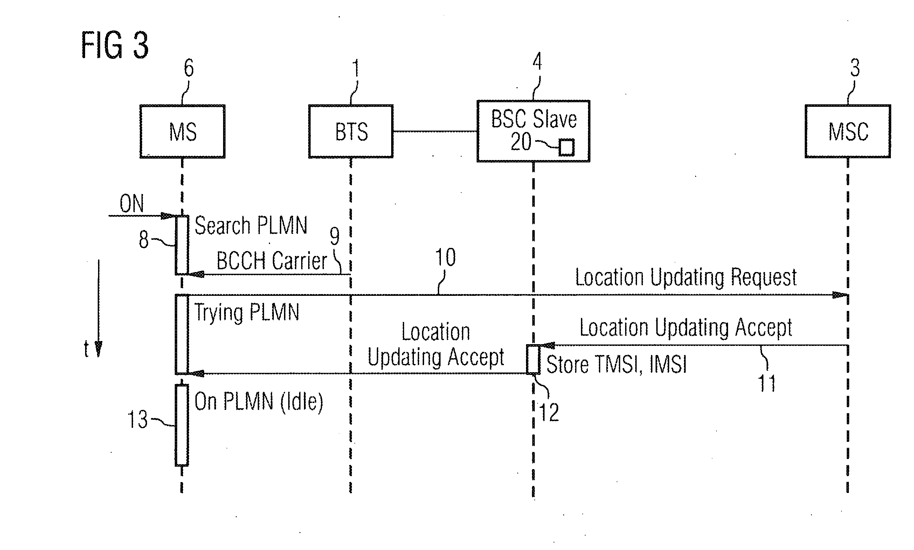

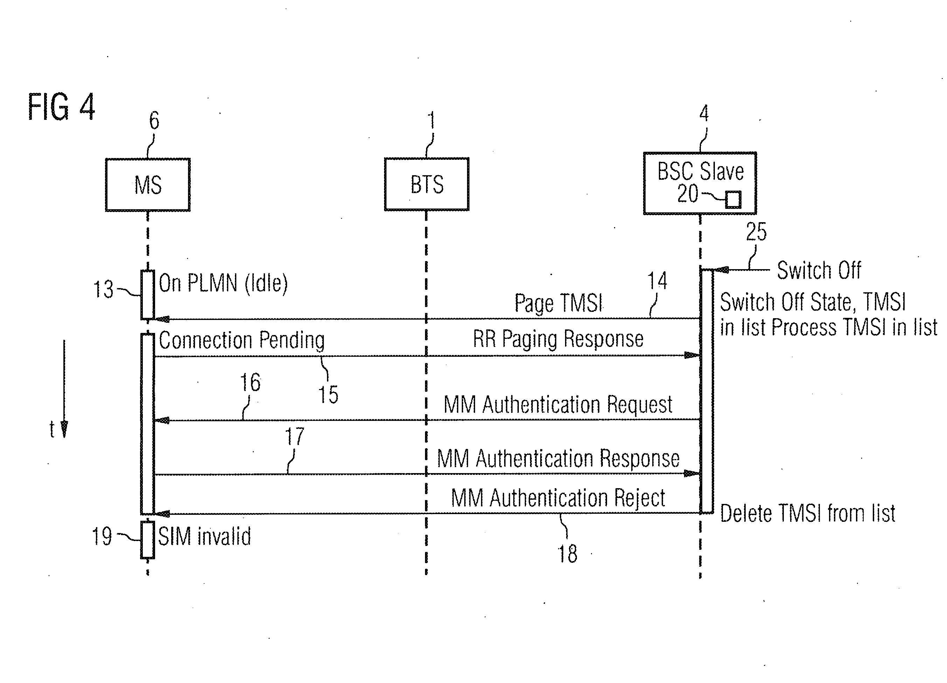

Im Folgenden wird der Protokollablauf beim Deaktivieren eingebuchter Mobilstationen 6 durch Signaldiagramme näher erläutert; in den Figuren 3 und 4 ist die Zeit mit einem Pfeil und mit dem Buchstaben "t" gekennzeichnet.

Wie aus Figur 3 zu entnehmen ist, wird ausgehend von einem Betriebszustand 8, in welchem eine Mobilstation einen Suchvorgang nach einem Public Land Mobile Network (PLMN) startet, von der Mobilstation 6 ein Signal 9 (Broardcast-Channel, BCCH-Carrier in Figur 3) empfangen. Dieses Signal 9 wird von der Basisstation BTS eines Mobilfunksystems fortwährend ausgestrahlt. Die Mobilstation 6 setzt daraufhin eine Aufenthaltsanfrage 10 (Location Updating Request in Figur 3) ab, welche über die Basisstation BTS, sowie über die erfindungsgemäße Einrichtung BSC-Slave zu einer digitalen Vermittlungsstelle 3 (MSC) am Boden weitergeleitet wird. Diese Vermittlungsstelle 3 (MSC) antwortet mit einem Signal 11, (Location Updating Accept in Figur 3). Das Signal 11 beinhaltet die Kennung der Mobilstation 6 in der Pico-Funkzelle 5, die sog. Temporary Mobile Subscriber Identity, im Folgenden abgekürzt TMSI. Diese TMSI wird nun vom BSC-Slave aus dem Signal 11 heraus gefiltert, und in einer Speichereinrichtung 20 des BSC-Slave gespeichert. Dieser Vorgang (Store TMSI) ist in Figur 3 mit dem Bezugszeichen 12 gekennzeichnet. Am Ende des Signaldiagramms in Figur 3 befindet sich die Mobilstation 6 nach Empfang des Signals 11 in einem Betriebszustand 13 (On PLMN idle).

Durch die Aufzeichnung der Kennung (TMSI) in der Speichereinrichtung 20 der BSC-Slave-Einheit 4 liegt das Wissen über angemeldete Mobiltelefone der Picozelle 5 nicht nur in der digitalen Vermittlungsstelle 3 (Mobile Services Switching Center) am Boden vor, sondern auch in der erfindungsgemäßen Einrichtung 4 an Bord des Flugzeugs. Durch das Herausfiltern der TMSI hat der BSE-Slave 4 stets Kenntnis über die Anzahl und die Kennung der in der Picozelle 5 des Flugzeugs eingebuchten Mobilstationen 6.

Beginnt nun das Flugzeug beispielsweise mit einem Landeanflug, so erzeugt die Flugsteuerung eine Deaktivierungssignal 25, das der erfindungsgemäßen Einrichtung (BSC-Slave) 4 zugeführt wird (Figur 4 und Figur 5). Die Einrichtung 4 (BSC-Slave) kennt Anzahl und Kennung der eingebuchten Mobilstationen 6 in der Pico-Funkzelle 5 und beginnt diese Endgeräte nacheinander zu deaktivieren.

In Figur 4 ist der Ablauf des Deaktivierens in einem zeitlichen Ablauf dargestellt. Der Vorgang des Deaktivierens wird mit dem Deaktivierungssignal 25 "Swith Off" eingeleitet. Der BSC-Slave sendet darauf hin nacheinander an jedes der an Hand der TMSI identifizierten Mobilstationen 6 ein Signal 14 (Page TMSI In Figur 4). Eine angesprochenen Mobilstation MS antwortet mit dem Signal 15 (RR Paging Response). Nun beginnt der BSC-Slave mit einem Austausch von Sicherheitsnachrichten. Hierzu sendet er das Signal 16 (MM Authentication Request) an die Mobilstation 6. Die Mobilstation 6 antwortet wiederum mit dem Signal 17 (MM Authentication Response). Obwohl die angesprochene Mobilstation 6 an sich berechtigt wäre, löscht der BSC-Slave diese TMSI aus dem Speicher (in Figur 4 Delete TMSI from list)und übermittelt an die Mobilstation 6 ein Ablehnungssignal 18 (MM Authentication Reject), das gemäß GSM-Norm 04.08 bewirkt, dass die Mobilstation 6 in einen Betriebszustand 19 übergeht, in welchem sie ihre eigene SIM als ungültig ansieht. Daher sendet die Mobilstation 6 während des sicherheitskritischen Landeanflugs bzw. während eines Steigflugs keine störenden Funkwellen mehr aus; dies gilt selbst dann, wenn das Flugzeug eine Flughöhe von kleiner als 3.000 m erreicht hat und die Mobilstation 6 in den Erfassungsbereich von Basisstationen eines Mobilfunknetzes am Boden kommt.

Die Temporary Mobile Subscriber Identity (TMSI) ist eine lokal und zeitlich begrenzte Identifikation der Mobilstation innerhalb der Pico-Funkzelle des Flugzeugs. Die TMSI erhält der Fluggast beim Betreten der Pico-Funkzelle 5. Verlässt der Fluggast das Flugzeug und schaltet er seine Mobilstation aus- und wieder ein, so findet ein Handover statt und die TMSI wird vom Netzelement 3 neu vergeben.

Eine permanente Identifikation eines Teilnehmers eines Mobilfunksystems ist durch die International Mobile Subscriber Identity (IMSI) gegeben. Diese IMSI wird vom Mobilfunkgerät der jeweiligen Pico-Funkzelle 5 mitgeteilt. Auf Basis der IMSI lassen sich bestimmte Teilenehmer erkennen und es lässt sich für diese Teilnehmer die erfindungsgemäße Deaktivierung des Mobilfunkgerätes durchführen, ggf. unter Berücksichtigung eines Eintrags in einer Positiv/Negativ-Liste (Black-White-List), die in einem Speicherbereich der erfindungsgemäßen Einrichtung abgelegt ist.

In Figur 5 ist die Anordnung der Pico-Funkzelle 5 in einem Flugzeug skizziert. Die Mobilstationen 6 werden dabei über eine Funkschnittstelle 7 mit jeweils in der Flugzeugdecke hinter der Verkleidung geführten Antennen einer so genannten Picocell-GSM/GPRS-Basisstation versorgt. Dadurch ist an jedem Sitzplatz des Flugzeugs der Empfang für private Funk-Kommunikations-Endgeräte, wie Handy, WiFi (wireless fidelity) equipped Laptops, Organizer oder andere tragbare, informationsverarbeitende Endgeräte möglich. Jede dieser Endgeräte wird durch die Basisstation eine Sendeleistung von wenigen Milliwatt vorgeschrieben. Gemäß der Erfindung ist sichergestellt, dass die privaten Endgeräte der Avionik des Flugzeugs nicht stören. Für den Fall, dass sich unter den Fluggästen ein aktiviertes Mobiltelefon eines anderen Standards (zum Beispiel CDMA) befindet, werden diese Funksignale von einer hier nicht näher dargestellten Vorrichtung erfasst und der Fluggast zum Ausschalten des Terminals aufgefordert.

Auf diese Weise wird erreicht, dass der Funkverkehr vom Flugzeug aus ausschließlich über die Satellitenfunkstrecke 19 abgewickelt wird. Die Satellitenfunkstrecke 19 kann beispielsweise das Satellitensystem SATCOM oder INMARSAT nutzen. In Figur 5 ist mit dem Bezugszeichen 22 allgemein der terrestrische Teil des Netzes 24 bezeichnet. Am Boden befindet sich die Basisstation-Controller 2 und die digitale Vermittlungsstelle (MSC) 3.

Im Ausführungsbeispiel der Figur 5 ist die Basisstation 1 und die erfindungsgemäßen Einrichtung 4 in einem Block dargestellt. Damit soll zum Ausdruck gebracht werden, dass die erfindungsgemäße Einrichtung ganz oder teilweise als sog. Computerprogrammprodukt realisiert ist, das mit der Basisstation 1 beispielsweise auf einem PC implementiert ist. Die Einrichtung 4 kann beispielsweise ein Algorithmus sein, der auf dem PC der Basisstation abläuft.

Selbstverständlich ist die Erfindung weder auf ein bestimmtes Kommunikationsnetz noch auf den vorliegenden Anwendungsfall beschränkt.

Es ist denkbar, dass ähnliche Anforderungen der Aktivierung von Mobilfunkgeräten beispielsweise in Krankenhäusern, in Laboratorien oder in anderen Einrichtungen in denen erhöhte Anforderungen hinsichtlich der elektromagnetischen Verträglichkeit vorlegen. Je nach Anwendung kann das Deaktivierungssignal durch eine technische Einrichtung oder manuell, beispielsweise von einem Operator vorgegeben werden.

### Liste der verwendeten Bezugszeichen

1 erstes Netzelement, Basisstation
2 zweites Netzelement, Basisstation-Controller
3 drittes Netzelement, digitale Vermittlungsstelle
4 Einrichtung, BSC-Slave
5 Mobilfunkzelle, Picozelle
6 Mobilstation, funkbasierte Teilnehmerendeinrichtung
7 Funkübertragungsstrecke zwischen 6 und 1
8 Ausgangszustand bei Aufenthaltsregistrierung
9 BCCH-Signal
10 Location Updating Request-Signal
11 Location Updating Accept-Signal
12 Speichern der TMSI
13 Zustand von 6 nach dem Speichern der TMSI
14 Page-TMSI-Signal
15 Paging Response
16 Authentication Request
17 Authentication Response
18 Authentication Reject
19 Zustand von 6 "SIM ungültig"
20 Speichereinrichtung in 4
21 Bodenstation
22 terrestrischen Teil des Netzes
23 Kommunikationsteilnehmer am Boden
24 Funkkommunikationssystem
25 Deaktivierungssignal

## Patentansprüche

1. Verfahren zum Deaktivieren von Mobilstationen in einer Funkzelle eines Funkkommunikationssystems, insbesondere in einer an Bord eines Flugzeugs befindlichen Picozelle eines GSM-Mobilfunknetzes, wobei das
Funkkommunikationssystem
- ein erstes Netzelement (1), das eine Sende-Empfangseinrichtung für jede Mobilstation (6) der Funkzelle (5) bildet,
- ein zweites Netzelement (2), das zum Steuern des ersten Netzelementes eingerichtet ist, und
- eine Einrichtung (4), die zwischen dem ersten Netzelement (1) und dem zweiten Netzelement (2) geschaltet ist, umfasst,
und wobei die Einrichtung (4) folgende Schritte durchführt:
- Erfassen einer ersten und einer zweiten Teilnehmerkenninformation (TMSI, IMSI), welche bei einem Austausch von Signalisierungsinformationen zwischen einer dieser Mobilstationen (6) und einem dritten Netzelement (3) übermittelt werden, wobei der Übermittlungsweg über die Einrichtung (4) geführt ist,
- Speichern der erfassten Teilnehmerkenninformationen (TMSI, IMSI) in einer Speichereinrichtung (20) der Einrichtung (4),
- Verwenden der gespeicherten Teilnehmerkenninformationen (TMSI, IMSI) beim Deaktivieren, wobei mehrere Mobilstationen (6) jeweils in Gruppen zusammengefasst und sequenziell hintereinander deaktiviert werden, wenn ein Deaktivierungssignal (25) der Einrichtung (4) zugeführt wird.

2. Verfahren nach Anspruch 1, **dadurch gekennzeichnet, dass** der Austausch der Signalisierungsinformationen von der Einrichtung (4) initiiert wird.

3. Verfahren nach Anspruch 1 oder 2, **dadurch gekennzeichnet, dass** das Deaktivieren einer Mobilstation (6) davon abhängig gemacht wird, ob die erfasste Teilnehmerkenninformationen (TMSI, IMSI) in einer Liste enthalten sind, die in der Einrichtung (4) vorhanden ist.

4. Verfahren nach Anspruch 1, 2 oder 3, **dadurch gekennzeichnet, dass** beim Erfassen der ersten Teilnehmerkenninformation (TMSI) eine über die Einrichtung (4) geführte Aufenthalts-Registrierungs-Nachricht (11) verwendet wird, welche als Antwort auf eine Anfrage einer Mobilstation (6) vom dritten Netzelement (3) an die anfordernde Mobilstation (6) übertragen wird.

5. Verfahren nach Anspruch 1, 2 oder 3, **dadurch gekennzeichnet, dass** beim Erfassen der zweiten Teilnehmerkenninformation (IMSI) eine über die Einrichtung (4) geführte Aufenthalts-Registrierungs-Nachricht (11) verwendet wird, welche als Anfrage einer Mobilstation (6) an das dritte Netzelement (3) übertragen wird.

6. Verfahren nach einem der Ansprüche 1 bis 5, **dadurch gekennzeichnet, dass** die Einrichtung (4) dem zweiten Netzelement (2) hierarchisch untergeordnet wird.

7. Verfahren nach einem der Ansprüche 1 bis 6, **dadurch gekennzeichnet, dass** die Einrichtung (4) und das erste Netzelement (1) an Bord eines Flugzeugs angeordnet werden.

8. Verfahren nach einem der Ansprüche 1 bis 7, **dadurch gekennzeichnet, dass** die Einrichtung (4) als Computerprogrammprodukt ausgeführt wird.

9. Verfahren nach Anspruch 7 oder 8, **dadurch gekennzeichnet, dass** das zweite Netzelement (2) und das dritte Netzelement (3) außerhalb des Flugzeugs angeordnet werden und dass für die Signalübermittlung zwischen der Einrichtung (4) und dem zweiten Netzelement (2) eine über Satelliten geführte Verbindung (19) verwendet wird.

10. Vorrichtung zum Deaktivieren von Mobilstationen in einer Funkzelle eines Funkkommunikationssystems, insbesondere in einer an Bord eines Flugzeugs befindlichen Picozelle eines GSM-Mobilfunknetzes, umfassend:
- ein erstes Netzelement (1), das eine Sende-Empfangseinrichtung für jede Mobilstation (6) darstellt,
- ein zweites Netzelement (2), das zum Steuern des ersten Netzelementes (1) ausgebildet ist,
- eine Einrichtung (4), welche in einen Signalisierungspfad zwischen dem ersten Netzelement (1) und dem zweiten Netzelement (2) geschalten ist,
- wobei die Einrichtung (4) derartig ausgebildet ist, sodass sie eine erste und eine zweite Teilnehmerkenninformation (TMSI, IMSI) erfasst, die zwischen der zumindest einen Mobilstation (6) und einem dritten Netzelement (3) übermittelt werden, diese in einer Speichereinrichtung (20) speichert und zum Deaktivieren der zumindest einen Mobilstation (6) verwendet, wobei die Einrichtung (4) außerdem so ausgebilded ist, dass sie mehrere Mobilstationen (6) in Gruppen zusammenfasst und Mobilstationen einer Gruppe sequenziell nacheinander deaktiviert, wenn der Einrichtung (4) ein Deaktivierungssignal (25) zugeführt ist.

11. Vorrichtung nach Anspruch 10, **dadurch gekennzeichnet, dass** die Einrichtung (4) einen Austausch von Signalisierungsinformationen mit jeder in der Funkzelle befindlichen Mobilstation initiiert.

12. Vorrichtung nach Anspruch 11, **dadurch gekennzeichnet, dass** die Einrichtung (4) das Deaktivieren einer Mobilstation (6) davon abhängig macht, ob die erfassten Teilnehmerkenninformationen (TMSI, IMSI) in einer Liste enthalten sind, die in der Einrichtung (4) vorhanden ist.

13. Vorrichtung nach Anspruch 12, **dadurch gekennzeichnet, dass** die erste Teilnehmerkenninformation (TMSI) in einer über die Einrichtung (4) geführten Aufenthalts-Registrierungs-Nachricht (11) enthalten ist, welche als Antwort auf eine Anfrage einer Mobilstation (6) von dem dritten Netzelement (3) an die anfordernde Mobilstation (6) übertragen wird.

14. Vorrichtung nach Anspruch 12, **dadurch gekennzeichnet, dass** die zweiten Teilnehmerkenninformation (IMSI) in einer über die Einrichtung (4) geführten Aufenthalts-Registrierungs-Nachricht (11) enthalten ist, welche als Anfrage einer Mobilstation (6) an das dritte Netzelement (3) übertragen wird.

15. Vorrichtung nach einem der Ansprüche 10 bis 14, **dadurch gekennzeichnet, dass** die Einrichtung (4) dem zweiten Netzelement (2) hierarchisch untergeordnet ist.

16. Vorrichtung nach einem der Ansprüche 10 bis 15, **dadurch gekennzeichnet, dass** die Einrichtung (4) und das erste Netzelement (1) an Bord eines Flugzeugs angeordnet sind.

17. Vorrichtung nach einem der Ansprüche 10 bis 16, **dadurch gekennzeichnet, dass** die Einrichtung (4) als Computerprogrammprodukt realisiert ist.

18. Vorrichtung nach Anspruch 17, **dadurch gekennzeichnet, dass** das zweite Netzelement (2) außerhalb des Flugzeugs angeordnet sind.

19. Vorrichtung nach Anspruch 18, **dadurch gekennzeichnet, dass** das zweite Netzelement (2) am Boden angeordnet ist und dass die Signalübermittlung zwischen der Einrichtung (4) und dem zweiten Netzelement (2) eine über Satelliten geführte Verbindung (19) ist.

## Claims

1. Method for deactivating mobile stations in a radio cell of a radio communication system, in particular in a picocell of a GSM mobile radio network which is situated on board an aircraft, whereby the radio communication system comprises
- a first network element (1) which forms a send/receive device for each mobile station (6) of the radio cell (5),
- a second network element (2) which is designed for controlling the first network element, and
- a device (4) which is connected between the first network element (1) and the second network element (2), and with the device (4) executing the following steps:
- detection of a first and a second subscriber identification information item (TMSI, IMSI) which are transferred during an exchange of signalling information between one of these mobile stations (6) and a third network element (3), whereby the transfer path is routed by way of the device (4),
- storage of the detected subscriber identification information items (TMSI, IMSI) in a memory device (20) of the device (4),
- use of the stored subscriber identification information items (TMSI, IMSI) during deactivation, with a plurality of mobile stations (6) each being combined into groups and being deactivated sequentially one after the other, when a deactivation signal (25) is delivered to the device (4).

2. Method according to claim 1, **characterised in that** the exchange of signalling information is initiated by the device (4).

3. Method according to claim 1 or 2, **characterised in that** the deactivation of a mobile station (6) is made dependent on whether the detected subscriber identification information items (TMSI, IMSI) are contained in a list which is present in the device (4).

4. Method according to claim 1, 2 or 3, **characterised in that** on detection of the first subscriber identification information item (TMSI) a location registration message (11) routed via the device (4) is used which is transmitted as a response to a request by a mobile station (6) from the third network element (3) to the requesting mobile station (6).

5. Method according to claim 1, 2 or 3, **characterised in that** on detection of the second subscriber identification information item (IMSI) a location registration message (11) routed via the device (4) is used which is transmitted as a request by a mobile station (6) to the third network element (3).

6. Method according to one of claims 1 to 5, **characterised in that** the device (4) is hierarchically subordinated to the second network element (2).

7. Method according to one of claims 1 to 6, **characterised in that** the device (4) and the first network element (1) are arranged on board an aircraft.

8. Method according to one of claims 1 to 7, **characterised in that** the device (4) is implemented as a computer software product.

9. Method according to claim 7 or 8, **characterised in that** the second network element (2) and the third network element (3) are arranged outside of the aircraft and that a link (19) routed via satellites is used for the signal transfer between the device (4) and the second network element (2).

10. Apparatus for deactivating mobile stations in a radio cell of a radio communication system, in particular in a picocell of a GSM mobile radio network which is situated on board an aircraft, comprising:
- a first network element (1) which represents a send/receive device for each mobile station (6),
- a second network element (2) which is designed for controlling the first network element (1),
- a device (4) which is connected into a signalling path between the first network element (1) and the second network element (2), with
- the device (4) being embodied such that it detects a first and a second subscriber identification information item (TMSI, IMSI) which are transferred between the at least one mobile station (6) and a third network element (3), stores this in a memory device (20) and uses it for deactivating the at least one mobile station (6), with the device (4) also being embodied such that it combines a plurality of mobile stations (6) into groups and deactivates mobile stations of a group sequentially one after the other when a deactivation signal (25) is delivered to the device (4).

11. Method according to claim 10, **characterised in that** the device (4) initiates an exchange of signalling information with each mobile station which is situated in the radio cell.

12. Device according to claim 11, **characterised in that** the device (4) makes the deactivation of a mobile station (6) dependent on whether the detected subscriber identification information items (TMSI, IMSI) are contained in a list which is present in the device (4).

13. Device according to claim 12, **characterised in that** the first subscriber identification information item (TMSI) is contained in a location registration message (11) routed via the device (4), which is transmitted as a response to a request by a mobile station (6) from the third network element (3) to the requesting mobile station (6).

14. Device according to claim 12, **characterised in that** the second subscriber identification information item (IMSI) is contained in a location registration message (11) routed via the device (4), which is transmitted as a request by a mobile station (6) to the third network element (3).

15. Device according to one of claims 10 to 14, **characterised in that** the device (4) is hierarchically subordinate to second network element (2).

16. Device according to one of claims 10 to 15, **characterised in that** the device (4) and the first network element (1) are arranged on board an aircraft.

17. Device according to one of claims 10 to 16, **characterised in that** the device (4) is implemented as a computer software product.

18. Device according to claim 17, **characterised in that** the second network element (2) is arranged outside of the aircraft.

19. Device according to claim 18, **characterised in that** the second network element (2) is arranged on the ground and that the signal transfer between the device (4) and the second network element (2) is a link (19) routed via satellites.

## Revendications

1. Procédé de désactivation de stations mobiles dans une cellule radio d'un système de radiocommunication, en particulier dans une pico-cellule d'un réseau radio mobile GSM située à bord d'un avion, le système de radiocommunication comprenant
- un premier élément de réseau (1) qui constitue un dispositif émetteur-récepteur pour chaque station mobile (6) de la cellule radio (5),
- un deuxième élément de réseau (2) qui est aménagé pour commander le premier élément de réseau et
- un dispositif (4) qui est monté entre le premier élément de réseau (1) et le deuxième élément de réseau (2),
et le dispositif (4) exécutant les étapes suivantes :
- détection d'une première et d'une deuxième information d'identification d'usager (TMSI, IMSI), lesquelles sont transmises lors d'un échange d'informations de signalisation entre l'une de ces stations mobiles (6) et un troisième élément de réseau (3), le chemin de transmission passant par le dispositif (4) ;
- stockage des informations d'identification d'usager détectées (TMSI, IMSI) dans un dispositif de mémoire (20) du dispositif (4) ;
- utilisation des informations d'identification d'usager stockées (TMSI, IMSI) lors de la désactivation, plusieurs stations mobiles (6) étant respectivement regroupées en groupes et désactivées séquentiellement les unes à la suite des autres lorsqu'un signal de désactivation (25) est amené au dispositif (4).

2. Procédé selon la revendication 1, **caractérisé en ce que** l'échange des informations de signalisation est initialisé par le dispositif (4).

3. Procédé selon la revendication 1 ou 2, **caractérisé en ce que** la désactivation d'une station mobile (6) est rendue dépendante du fait que les informations d'identification d'usager détectées (TMSI, IMSI) sont contenues dans une liste qui est présente dans le dispositif (4).

4. Procédé selon la revendication 1, 2 ou 3, **caractérisé en ce qu'**est utilisé, à la détection de la première information d'identification d'usager (TMSI), un message d'enregistrement de localisation (11) passant par le dispositif (4), lequel message est transmis, en tant que réponse à une requête d'une station mobile (6), du troisième élément de réseau (3) à la station mobile requérante (6).

5. Procédé selon la revendication 1, 2 ou 3, **caractérisé en ce qu'**est utilisé, à la détection de la deuxième information d'identification d'usager (IMSI), un message d'enregistrement de localisation (11) passant par le dispositif (4), lequel message est transmis au troisième élément de réseau (3) en tant que requête d'une station mobile (6).

6. Procédé selon l'une des revendications 1 à 5, **caractérisé en ce que** le dispositif (4) est subordonné hiérarchiquement au deuxième élément de réseau (2).

7. Procédé selon l'une des revendications 1 à 6, **caractérisé en ce que** le dispositif (4) et le premier élément de réseau (1) sont placés à bord d'un avion.

8. Procédé selon l'une des revendications 1 à 7, **caractérisé en ce que** le dispositif (4) se présente sous la forme d'un produit de programme informatique.

9. Procédé selon la revendication 7 ou 8, **caractérisé en ce que** le deuxième élément de réseau (2) et le troisième élément de réseau (3) sont situés en-dehors de l'avion et **en ce qu'**une liaison (19) par satellite est utilisée pour la transmission de signaux entre le dispositif (4) et le deuxième élément de réseau (2).

10. Dispositif de désactivation de stations mobiles dans une cellule radio d'un système de radiocommunication, en particulier dans une pico-cellule d'un réseau radio mobile GSM située à bord d'un avion, comprenant
- un premier élément de réseau (1) qui constitue un dispositif émetteur-récepteur pour chaque station mobile (6),
- un deuxième élément de réseau (2) qui est aménagé pour commander le premier élément de réseau (1),
- un dispositif (4) qui est monté sur un chemin de signalisation entre le premier élément de réseau (1) et le deuxième élément de réseau (2),
le dispositif (4) étant réalisé de manière telle qu'il détecte une première et une deuxième information d'identification d'usager (TMSI, IMSI), lesquelles sont transmises entre l'au moins une station mobile (6) et un troisième élément de réseau (3), qu'il stocke celles-ci dans un dispositif de mémoire (20) et qu'il les utilise pour désactiver l'au moins une station mobile (6), le dispositif (4) étant en outre réalisé de manière telle qu'il regroupe plusieurs stations mobiles (6) en groupes et désactive des stations mobiles d'un groupe séquentiellement les unes à la suite des autres lorsqu'un signal de désactivation (25) est amené au dispositif (4).

11. Dispositif selon la revendication 10, **caractérisé en ce que** le dispositif (4) initialise un échange d'informations de signalisation avec chaque station mobile située dans la cellule radio.

12. Dispositif selon la revendication 11, **caractérisé en ce que** le dispositif (4) rend la désactivation d'une station mobile (6) dépendante du fait que les informations d'identification d'usager détectées (TMSI, IMSI) sont contenues dans une liste qui est présente dans le dispositif (4).

13. Dispositif selon la revendication 12, **caractérisé en ce que** la première information d'identification d'usager (TMSI) est contenue dans un message d'enregistrement de localisation (11) passant par le dispositif (4), lequel message est transmis, en tant que réponse à une requête d'une station mobile (6), du troisième élément de réseau (3) à la station mobile requérante (6).

14. Dispositif selon la revendication 12, **caractérisé en ce que** la deuxième information d'identification d'usager (IMSI) est contenue dans un message d'enregistrement de localisation (11) passant par le dispositif (4), lequel message est transmis au troisième élément de réseau (3) en tant que requête d'une station mobile (6).

15. Dispositif selon l'une des revendications 10 à 14, **caractérisé en ce que** le dispositif (4) est subordonné hiérarchiquement au deuxième élément de réseau (2).

16. Dispositif selon l'une des revendications 10 à 15, **caractérisé en ce que** le dispositif (4) et le premier élément de réseau (1) sont placés à bord d'un avion.

17. Dispositif selon l'une des revendications 10 à 16, **caractérisé en ce que** le dispositif (4) se présente sous la forme d'un produit de programme informatique.

18. Dispositif selon la revendication 17, **caractérisé en ce que** le deuxième élément de réseau (2) est situé en dehors de l'avion.

19. Dispositif selon la revendication 18, **caractérisé en ce que** le deuxième élément de réseau (2) est situé au sol et **en ce que** la transmission de signaux entre le dispositif (4) et le deuxième élément de réseau (2) est une liaison (19) par satellite.
